# EUROPEAN PATENT SPECIFICATION

(11) **EP 3 943 929 B1**
(45) Date of publication and mention of the grant of the patent: **02.07.2025**
(21) Application number: 20187445.0
(22) Date of filing: 23.07.2020
(51) Int. Cl.: G01N 27/74

(54) **DEVICE FOR MEASURING THE PARTIAL PRESSURE OF A PARAMAGNETIC OR DIAMAGNETIC GAS**
VORRICHTUNG ZUR MESSUNG DES PARTIALDRUCKS EINES PARAMAGNETISCHEN ODER DIAMAGNETISCHEN GASES
DISPOSITIF POUR MESURER LA PRESSION PARTIELLE D'UN GAZ PARAMAGNÉTIQUE OU DIAMAGNÉTIQUE

(43) Date of publication of application: 26.01.2022
(73) Proprietor: TE Connectivity Germany GmbH, 64625 Bensheim (DE)
(72) Inventor: MEISENBERG, Armin, 44227 Dortmund (DE); BARTOS, Axel, 45731 Waltrop (DE)
(74) Representative: Grünecker Patent- und Rechtsanwälte PartG mbB

(56) References cited:
- DE-A1- 10 037 380
- US-A- 4 893 495
- US-A1- 2011 252 868
- US-A1- 2014 079 091

## Description

The present invention relates to a device for determining a partial pressure of a paramagnetic and/or diamagnetic gas, and further relates to a method for determining a partial pressure of a paramagnetic and/or diamagnetic gas.

Devices for measuring a partial pressure of paramagnetic gas exist. An early type of a paramagnetic measuring cell, which relied upon the magnetic susceptibility of oxygen utilizes a sealed glass tube containing a weakly diamagnetic gas, such as nitrogen. The tube is suspended between the wedge-shaped pole pieces of a permanent magnet, which provide a non-uniform magnetic field, and the tube is free to rotate about a vertical axis. The entire structure is then placed within a chamber containing a selected gas. When oxygen is introduced into the chamber surrounding the tube, the nitrogen in the tube is effectively diamagnetic relative to the surrounding paramagnetic oxygen gas, and the tube experiences a force tending to rotate it into the region where the magnetic field is weakest. This movement, or a force required to prevent this movement, can be measured as an indication of the concentration of oxygen in the chamber. The cell, however, is fragile, and the rotational axis of the tube must be consistently oriented for each use, rendering it unsuitable for industrial oxygen measurement applications.

Another type of apparatus for measuring a concentration of a paramagnetic gas such as oxygen relies upon the inverse relationship between temperature and the magnetic susceptibility of oxygen. As a result of this inverse relationship, heating a portion of an oxygen-containing mixture in a non-homogeneous magnetic field creates a "*magnetic wind*" effect, which can be measured through its thermal effect on an electrical resistance element.

US 2011/252868 A1 relates to a device for measuring the concentrations of paramagnetic gases in a gas sample that has at least one modulatable magnetic flux source, which has an air gap, to which a gas sample can be fed. A controllable power source, for generating current and voltage signals, is coupled with the modulatable magnetic flux source in order to generate a modulatable magnetic flux within the air gap. Two measuring points are arranged at least partly within the air gap. Each measuring point has an electrically controllable heating device and a heat conduction-measuring unit or resistive measuring device. Each measuring point is coupled with a variable power source to heat the heating device to a working temperature. Each measuring point is coupled with a measuring circuit to measure heat conduction measured signals generated by the heat conduction-measuring unit, from which the concentrations of paramagnetic gases, which are contained in the gas sample, can be derived.

DE 10 037 380 A1 relates to a device for measuring the concentration of a paramagnetic gas in a gas sample. The device is characterized by a modulable magnetic field source with an air gap as a measuring chamber for receiving the gas sample, a modulation source for delivering a modulation signal to the magnetic field source, a measuring element arranged within the air gap and heated to a working temperature for emitting a heat flow measuring signal, a filter device for separating periodic fluctuations the heat flow measurement signal due to the modulation of the magnetic field source, the amplitude of the periodic fluctuations being a measure of the proportion of gas in the gas sample.

US 2014/079091A1 relates to a heat flux sensor comprising at least one support, where at least one membrane is suspended relative to the support by at least four nanowires. The membrane is made from at least one current-conducting material and the nanowires are made from a current-conducting material, with two nanowires connected to a current source to polarize the membrane between two terminals and a heater for heating the membrane, and where two nanowires are connected to a voltmeter to form measure the voltage at the terminals of the membrane.

US 4 893 495A relates to an oxygen sensing apparatus that uses a sensing cell including two pairs of electrically heated thermistors and a source of an inhomogeneous magnetic field. One thermistor of each pair is positioned inside the magnetic field, and the second thermistor of each pair is positioned adjacent to the respective first thermistor of each pair, substantially outside the magnetic field. When oxygen is present in the sensing cell, the thermistors inside the magnetic field generate a gas flow in the direction of the adjacent thermistors of each pair positioned outside the magnetic field, thus tending to reduce the temperature of the thermistors inside the field and increase the temperature of the thermistors outside the field. The thermistors are connected in a measuring bridge circuit including elements for maintaining the temperature of the thermistors at a substantially constant level, thereby providing a signal that can be used to compensate for changes in the thermal characteristics of the background gases.

Conventional magnetic wind oxygen measurement devices, however, are subject to relatively large errors due to the changes in the thermal properties of the surrounding, or "*background*" gases. In particular, the presence of different background gases causes conventional magnetic wind oxygen sensors to yield false readings of oxygen levels, partly due to the large differences in thermal characteristics of the background gases. Additionally, conventional magnetic wind oxygen sensing devices suffer from position sensitivity and background gas dependency, especially in comparison with methods based on direct measurement of magnetic susceptibility.

Conventional dumbbell sensors for oxygen detection comprise high sensitive mechanics which can easily be influenced by mechanical disturbances.

Conventional magnetic wind sensors are influenced by the presence of other gases and by the sensor orientation to the vertical direction.

Conventional sensors using chemical reactions are subject to a change in their properties over time due to chemical changes in the sensor materials.

However, there is a need for a device capable of measuring the partial pressure of a paramagnetic or diamagnetic gas with a high selectivity to other gases, being robust, having a long life time and easy to manufacture. There also exists a need for paramagnetic and/or diamagnetic gas sensing method and apparatus which provide accurate and reliable measurement of the gas concentration, regardless of the composition of the background gases.

This object is solved by the subject matter of the independent claims. Advantageous embodiments of the present invention are the subject matter of the dependent claims.

The present invention is based on the idea that, by providing a device for determining a partial pressure of a paramagnetic or a diamagnetic gas in a gas mixture using a plurality of thermal conductivity sensors exposed to magnetic fields of different strengths, each of the thermal conductivity sensor comprising an electrically heated membrane for being in thermal contact with the gas mixture, the accuracy of the determination of the partial pressure of the gas is improved. The robustness and the lifetime of the sensors are also improved. In a strong magnetic field the thermal conductivity of a paramagnetic gas is slightly lower than without field. This effect can be measured using a thermal conductivity sensor. In order to accurately detect partial pressure (content) of a paramagnetic gas independently of the presence of other gases, of temperature and other disturbing effects, in the present invention several thermal conductivity sensors with a good thermal contact with the gas mixture are placed in high and low magnetic field regions created by a permanent magnet arrangement or pairs of magnets which allow to create large magnetic field gradients with high and low magnetic field strengths in a small space. The sensors comprise membranes heated by means of heaters (for example resistances). The presence of a paramagnetic gas, for example oxygen, in the gas mixture leads to temperature differences between the heated membranes depending on the local magnetic field. The oxygen-caused temperature differences of the membranes of the sensors can be detected by connecting the heater resistors to a Wheatstone bridge or by means of thermocouples connected to thermopiles. The average resistance of the heaters may provide additional information about the average thermal conductivity of the gas mixture. The average thermal conductivity is of special interest when gases with very high or low thermal conductivity like He, H₂, CO₂ are present in the mixture. He, H2 have high thermal conductivity while CO₂ has a low thermal conductivity. The key idea of the claimed sensor assembly is to provide identical thermal conductivity sensors where all conditions are the same except for the presence or absence of a strong magnetic field. The thermal situation of all sensors is the same as long as there is no paramagnetic or diamagnetic gas present. The paramagnetic (or diamagnetic) gas caused differences in membrane temperatures are measured by a Wheatstone bridge (heater resistance) or by use of thermocouples.

Accurate measurement of for example oxygen concentration in a gas mixtures is important in a wide range of industrial, clinical and laboratory processes. The paramagnetic properties of oxygen makes the device of this invention particularly appropriate for measuring the partial pressure of oxygen in gas mixtures.

The device of the present invention may be used for determining the partial pressure of a paramagnetic gas such as oxygen in medicine applications, air quality applications or in processes where fuel is combusted.

In particular, the present invention provides a device for determining a partial pressure of a paramagnetic and/or diamagnetic gas, wherein at least one first thermal conductivity sensor is arranged to be exposed to a first magnetic field having a first strength and at least one second thermal conductivity sensor is arranged to be exposed to a second magnetic field having a second strength, wherein each of the first and second thermal conductivity sensors comprises a membrane for being in thermal contact with the gas mixture, wherein the partial pressure of the gas is associated with a relation between a value of a thermal conduction between the membrane of the first thermal conductivity sensor and the gas mixture and a value of a thermal conduction between the membrane of the second thermal conductivity sensor and the gas mixture; an electrical heating element for providing a predetermined amount of heat to the membrane; means for determining the temperature of the membrane which is associated with the amount of heat provided by the electrical heating element to the membrane and to the thermal conduction between the membrane and the gas. The device further comprising means for calculating the partial pressure of the gas in response to the temperature of the membrane of the first thermal conductivity sensor and the temperature of the membrane of the second thermal conductivity sensor.

An advantage deriving from this solution is that by providing at least a first thermal conductivity sensor arranged to be exposed to a first magnetic field having a first strength and at least one second sensor is arranged to be exposed to a second magnetic field having a second strength and by providing each of the first and second thermal conductivity sensors with a membrane for being in thermal contact with the gas, it allows to detect in a precise and accurate manner differences between the thermal conductivity of the gas exposed to a high magnetic field and the thermal conductivity of the gas exposed to a low magnetic field which may be of the order of 1% difference. Due to the weakness of the effect the difference between the strength of the first magnetic field and the second magnetic field may be large. The difference between the thermal conductivity of the gas exposed to the high magnetic field and the thermal conductivity of the gas exposed to the low magnetic field can be measured by measuring the difference in the temperatures of the membranes. For example if the heating elements for heating the membranes initially provide the same amount of heat to the membrane of the sensor subjected to the high magnetic field and to the membrane of the sensor subjected to the low magnetic field, in the absence of a paramagnetic gas both membranes may acquire the same temperature supposing that they are correctly calibrated. In the presence of a paramagnetic gas, in the vicinity of the thermal conductivity sensor exposed to the magnetic field of a high strength, the dipole moments of the molecules or atoms of the paramagnetic gas are subjected to a torque in a direction that tends to line the dipole moments of the gas parallel to the magnetic field. The interaction between molecules and magnetic field disturbs the free movement of the gas molecules. These magnetic forces restrict the free movement of the gas molecules so that their ability to transport kinetic energy is also reduced. This effect causes a decrease of the thermal conductivity of the gas surrounding the first thermal conductivity sensors. In the region exposed to a magnetic field of a low strength where a second thermal conductivity sensor is placed, the dipole moments of the molecules or atoms of the paramagnetic gas are not lined parallel and the thermal conductivity of the gas in the vicinity of the sensors exposed to the low magnetic field is not decreased.

The inventors realized that the challenge is to design thermal conductivity sensors capable of measuring the variation in thermal conductivity of the gas resulting from the effect of the presence or absence of a magnetic field of high strength, while avoiding errors deriving for example from interference of the environment with the thermal conductivity sensor's measurement process, the most significant source of error may be the ambient temperature. For example, if initially the first and second sensors are at different temperatures, the thermal conduction between the first sensor and the gas and the thermal conduction between the second sensor and the gas may be different not only due to the presence of a paramagnetic gas exposed to the magnetic field of high strength but also due to the initially different temperatures of the sensors in which case the difference in thermal conductivity measured by the first and the second thermal conductivity sensor may be associated not only with the partial pressure of the gas but also with the initial differences in temperatures of the sensors. Therefore, appropriate calibration of the sensors, especially regarding their temperature is important in terms of avoiding errors in the measurement of the partial pressure. Especially, an incorrect calibration of the temperature of the thermal conductivity sensors (zero error) may interfere with the measurement of the thermal conductivity of the gas. In order to minimize the influence of undesirable errors, more than one first thermal conductivity sensor and more than one second thermal conductivity sensor may be used. For example it is easier to detect the presence of errors if the measurements are repeated by comparing the readings of a plurality of thermal conductivity sensors with each other. This results in more accurate measurements.

Another advantage is that it provides compensation for interference of pressure with the sensor measurement.

Another advantage of the invention is that by providing each of the first and second thermal conductivity sensors with a membrane for being in thermal contact with the gas mixture a precise determination of the thermal conductivity of the gas can be achieved.

Another advantage of the invention is that by using an electrical heating element for providing a predetermined amount of heat to the membrane of the first and second thermally conductivity sensors, the difference between the temperature of the membrane of the thermal conductivity sensor exposed to the magnetic field of high strength and the temperature of the membrane of the thermal conductivity sensor exposed to the magnetic field of low strength is associated with the thermal conductivity of the gas. Initially, the membranes of both sensors acquire a predetermined temperature which depends on the amount of heat provided by the heating elements. Due to the membranes being in thermal contact with the gas mixture there is heat conduction from the membranes to the gas mixture which lowers the temperature of the membranes. The decrease in temperature of the membranes should be similar in both membranes in the absence of a paramagnetic gas. However, if a paramagnetic gas is present, the thermal conductivity of the paramagnetic gas decreases in the regions exposed to the high magnetic field, which results in less amount of heat transmitted from the membrane of the thermal conductivity sensor subjected to the magnetic field of a high strength to the gas. The thermal conductivity of the gas exposed to the low magnetic field does not decrease, thus the amount of heat transmitted from the membrane of the thermal conductivity sensor subjected to the magnetic field of a low strength is higher, resulting in a lower temperature of this membrane. In other words, the difference between the temperatures of the membranes of the first and second sensors once the temperatures of the membranes have stabilized in thermal contact with the gas, provides the information about thermal conductivity of the gas in the vicinity of each sensor. In other words, the partial pressure of the paramagnetic or diamagnetic gas is associated with the temperature of the membrane in thermal contact with the gas. The differences in thermal conductivity is associated with the partial pressure of the gas. The time that it may take for stabilization of the temperature of the membrane in thermal contact with the gas may be one second. However it may also take other times. The reaction of the membrane temperature is fast (it may be less than a second) due to its low thermal capacity. The main reason for time delay may be the time needed to exchange the gas surrounding the membranes. Fast gas flow should be avoided due to its cooling effect. However, diffusion may take time.

Advantageously, the partial pressure of the gas can be determined by static temperature conductivity measurement.

Advantageously, a correct calibration of the sensors based on correctly calibrating the initial temperatures of the membranes of the different sensors to be equal to each other is possible with the device of this invention.

Another advantage is that the sensor assembly allows to measure the thermal conductivity of the gas while maintaining the sensors at low temperature which increases the lifetime of the sensors. For example, the temperature to which the membranes are heated by means of providing a predetermined amount to heat by the heating elements may be in the range from 100 to 150 degrees Celsius. However, other temperatures are also possible.

Another advantage is that the first and second magnetic fields may be static magnetic fields applied locally at the first sensor position and at the second sensor position respectively. A large magnetic field gradient with high and low magnetic field strengths can be created in a small space. Advantageously, the first magnetic field is localized in the area in which the first thermal conductivity sensor is localized and the second magnetic field is localized in the area in which the second thermal conductivity sensor is localized. Permanent magnets are used to create well defined strong local magnetic fields.

Another advantage is that it allows to determine the partial pressure of a gas with a high selectivity to other gases.

Preferably the device (sensor) comprises four thermal conductivity sensors. This avoids errors in the measurement of the partial pressure deriving form magnetic edge effects that may occur when using only a first and a second thermal conductivity sensors. Edge effects are present in the thermal conductivity sensors placed at the periphery of the sensor. For a Wheatstone bridge 4 resistors may be useful.

Preferably the device (sensor) comprises two thermal conductivity sensors. This solution is advantageous in terms of costs of production and smaller size of the device.

The device may also comprise other number of sensors.

Preferably the plurality of thermal conductivity sensors are exposed to magnetic fields of different strengths, for example a first thermal conductivity sensor may be exposed to a first magnetic field of a first strength, a second thermal conductivity sensor may be exposed to a second magnetic field of a second strength, a third thermal conductivity sensor may be exposed to a third magnetic field of a third strength, a fourth thermal conductivity sensor may be exposed to a third magnetic field of a fourth strength etc. The first, second, third and fourth strength of the respective magnetic fields may be different to each other, preferably arranged to alternate in space high and low strengths.

According to an advantageous embodiment of the present invention, the membrane of the first and second thermal conductivity sensor has a cover forming a measurement volume in the space between the membrane and the cover, the cover having a cavity arranged for the gas entering into the measurement volume by diffusion. The measurement volume may also be referred to as measurement area.

This solution is advantageous in that by requiring that the gas enters into the measurement volume by diffusion, the gas in the measurement volume is stationary. Another advantage is that it avoids errors resulting from gas convection in the vertical direction due to gravity forces.

Another advantage of this embodiment is that it avoids heat transport by convection and thus, the dependence of the value of the thermal conduction between the membrane of the first thermal conductivity sensor and the gas mixture and the value of a thermal conduction between the membrane of the second thermal conductivity sensor and the gas mixture on the orientation of the sensors to the vertical is reduced. Additionally it allows stationary temperature measurements.

According to an advantageous embodiment of the present invention the thermal conductivity sensors are constructed with thin film technology.

Sensors fabricated using thin film technology have the advantage that they can be produced cost efficiently by mass production. Other technologies, preferably MEMS technologies, may of course also be employed.

According to an advantageous embodiment of the present invention the thermal conductivity sensors are constructed with nanowire technology.

According to the present invention the first and second magnetic fields are generated by permanent magnets.

This solution is advantageous in that it allows to create a strong magnetic field at one sensor position and a field near zero at the next sensor position. It also allows to create alternately high and low magnetic field regions. Preferably the strength of the magnetic fields created by the permanent magnets in the strong field areas is between 0.5 and 1 T. The strength of the magnetic fields created by the permanent magnets in the weak field areas is near 0 T.

According to an advantageous embodiment of the present invention, the thermal conductivity sensors are thermally coupled to each another by means of a common substrate or a common carrier plate. A common substrate means an (little) array of sensors placed on one common silicon chip without gaps in between. Advantageously, a common substrate allows a further miniaturization of the arrangement and ensures, due to the high thermal conductivity of silicon, a very similar substrate temperature around each membrane.

This solution is also advantageous in that by thermally coupling the thermal conductivity sensors avoids errors in the determination of the partial pressure deriving from initially the first and second sensors being at different temperatures. For example if the thermal conduction between the first sensor and the gas and the thermal conduction between the second sensor and the gas is different not only due to presence of a paramagnetic (or diamagnetic) gas exposed to a magnetic field of a high strengths but also due to initially different sensor's temperatures, the resulting determined partial pressure may be subjected to an error deriving from the initial different sensor's temperatures. One reason for such temperature differences may be the heat created by the membrane heaters which is distributed with different efficiency depending on the placement of the sensor element at the edges or in the center of the array. Another reason may be a cooling effect of the gas flow, which is necessary to exchange the gas near the membranes. By thermally coupling the thermal conductivity sensors to each other the difference in thermal conductivity measured by the sensors may be more accurately associated with the partial pressure of the gas.

According to an advantageous embodiment of the present invention a difference between the temperature value of the membrane of the first thermal conductivity sensor and a temperature value of the membrane of the second thermal conductivity sensor is determined by means of thermocouples; wherein the partial pressure of the paramagnetic or diamagnetic gas is determined based on the difference between the temperature value of the membrane of the first thermal conductivity sensor and the temperature value of the membrane of the second thermal conductivity sensor measured with the thermocouples.

This solution is advantageous in that by using the thermocouples a measured voltage (gradient) is directly proportional to the difference (gradient) between the temperature value of the membrane of the first thermal conductivity sensor and a temperature value of the membrane of the second thermal conductivity sensor.

According to another embodiment the membrane temperature is determined with thermopiles.

According to another embodiment of the present invention the temperature of the membrane of the first thermal conductivity sensor and the temperature of the membrane of the second thermal conductivity sensor are compared to each other by means of comparing a value of a resistance arranged on the membrane of the first thermal conductivity sensor and a value of a resistance arranged on the membrane of the second thermal conductivity sensor, the resistances being arranged on the membranes by means of an interconnection of the thermally conductivity sensors which forms one or more voltage dividers or a Wheatstone bridge circuit.

This solution is advantageous in that a more precise temperature measurement can be achieved by using resistances. An advantage deriving from using the Wheatstone bridge is that it provides accurate measurements.

According to another embodiment of the present invention, thermocouples are arranged to determine a temperature difference between a temperature of a substrate of the first thermal conductivity sensor and the temperature of the membrane of the first thermal conductivity sensor and a temperature difference between a temperature of a substrate of the second thermal conductivity sensor and the temperature of the membrane of the second thermal conductivity sensor, wherein the thermocouples are interconnected such that a signal associated with a difference between the temperature of the membranes is generated, wherein the partial pressure of the gas is associated with the signal.

This solution is advantageous in that it reduces possible errors in the measurement of the temperature of the membranes for example by compensating for disturbing effects of the ambient temperature. It provides an improved calibration of the device.

According to an advantageous embodiment of the present invention, a temperature of the membrane of the first thermal conductivity sensor and the temperature of the membrane of the second thermal conductivity sensor are compared to each other by means of comparing a value of a resistance arranged on the membrane of the first thermal conductivity sensor and a value of a resistance arranged on the membrane of the second thermal conductivity sensor, wherein the resistances for comparing the temperatures of the membranes of the first and second thermally conductivity sensors are also used as the electrical heating elements for heating the membranes of the first and second thermally conductive sensors.

This solution is advantageous in that the electrically heating elements can be used simultaneously for providing the predetermined amount of energy (in other words the predetermined amount of heat), to be transmitted to the membranes of each of the thermal conductivity sensors (in order to reach a temperature) and for determining the actual temperature of the membranes once they have stabilized their temperature after being in thermal contact with the gas subjected to magnetic fields of different strengths. In other words, this embodiment is based on the idea that, while the membranes of the sensors are heated to a predetermined temperature by the heating elements which provide a predetermined amount of heat to the membranes of different thermal conductivity sensors, simultaneously the membranes loose heat by thermal conduction from the membrane to the gas which may be at a cooler temperature. In other words, the amount of heat needed to reach the predetermined temperature of the membranes depends on the amount of energy (heat) lost by thermal conduction with the gas. For example by comparing the amount of heat provided by a resistance to a membrane of a sensor exposed to a high magnetic field to the amount of heat provided by a resistance of a sensor exposed to a low magnetic field so that both membranes acquire a predetermined temperature, the thermal conductivity of the gas in the vicinity of the sensor exposed to the high and low magnetic fields can be determined. The thermal conductivity of the gas exposed to the high magnetic field is lower than the thermal conductivity of the gas exposed to the low magnetic field and therefore the amount of heat provided by the resistance to the membrane of the sensor exposed to the high magnetic field so that the membrane acquires a predetermined temperature is lower than the amount of heat provided by the resistance to the membrane of the sensor exposed to the low magnetic field so that the membrane acquires the predetermined temperature. The predetermined temperature that the membranes are to acquire may be between 100 and 150 degrees Celsius.

According to an advantageous embodiment of the present invention means arranged on the thermal conductivity sensors allow the adjustment of a signal offset by laser trimming. This is a particularly efficient and accurate manner of calibrating the sensors.

According to the present invention the first and second magnetic fields are generated by permanent magnets arranged in pairs above and below the membrane or exemplarily are arranged on the side of a plane of the membrane such that the directions of magnetization of opposing magnets are opposite to each other.

Advantageously, this allows to create very large magnetic field gradients with regions of high and low magnetic field strengths on a small space.

This solution is also advantageous in that each of the two magnets forming a pair of magnets create a magnetic field having a direction opposite to the direction of the magnetic field created by the second magnet of the pair, this results in an almost zero field in the central region between the two magnets of the pair. At the same time, the magnetic field created pairs of magnets adjacent to each other have the same direction in the regions near the border between adjacent pair of magnets which results in high magnetic fields in the border between adjacent pairs of magnets.

According to another example, the first and second magnetic fields are generated by permanent magnets arranged in pairs above and below a plane containing the membrane or on the sides of the membrane such that the magnetization directions of opposing magnets is parallel.

Advantageously this allows to create very large magnetic field gradients with regions of high and low magnetic field strengths on a small space.

According to an advantageous embodiment of the present invention the magnetic fields are generated by permanent magnets, wherein the magnetic fields are influenced by ferromagnetic flux conductors. This allows to more precisely guide the magnetic field needed for the measurement.

According to an advantageous embodiment of the present invention magnets used for generating the magnetic fields or ferromagnetic flux conductors used for influencing (modifying) the magnetic fields are positioned or generated on at least one of the thermal conductivity sensor substrate or membrane. Thereby, a smaller size of the sensor arrangement can be achieved. The measures taken in order to concentrate magnetic field on the sensor membranes reduce the needed magnet volume as well as the creation of possibly disturbing fields outside the assembly.

According to an advantageous embodiment of the present invention the magnetic fields created above and below the membrane have a direction substantially perpendicular to the direction of the heat flow between the membrane and the gas.

According to an advantageous embodiment of the present invention the thermal conductivity sensors comprise a common substrate.

Advantageously the calibration of the sensor is improved by using a common substrate, especially a silicon substrate, as it ensures that the initial temperature of the membrane frame and the membranes of the sensors exposed to the high and low magnetic fields is the same and thus the difference in temperature once the thermal equilibrium between the membranes and the gas has taken place is due only to the different in thermal conduction between the membrane and the gas in the vicinity of that sensor i.e. it indicates the partial pressure of the gas. For example, a silicon substrate allows that a frame around the single membranes has the same temperature as well as the caps which cover the membranes. Alternatively other materials of good thermal conductivity may be used for the substrate. Therefore the resulting measurement is more accurate.

According to a further advantageous embodiment of the present invention the membranes of the thermal conductivity sensors are protected by covers, housings, grids, nets, porous walls or comparable construction elements against the action of gas flows, thermal convection flows and the occurrence of magnetic wind in such a way that the gas in the measurement volume is at rest and the gas exchange between the measurement volume and the area around the sensor is effected by diffusion.

Advantageously, static thermal temperature measurement can be carried out. Another advantage is that it avoids errors in the result resulting from the gas convection in the vertical direction due to gravity forces.

According to a further advantageous embodiment of the present invention, an average thermal conductivity of the gas mixture is determined based on a difference between the temperatures of the membranes and a comparison of the temperatures of the membranes and the temperatures of the substrate of the thermal conductivity sensors, so as to detect the presence of light, highly heat-conducting gases such as hydrogen or helium or also heavy, low heat-conducting gases such as carbon dioxide.

Advantageously, determining both a difference between the temperatures of the membranes and a comparison of the temperatures of the membranes and the temperatures of the substrate provides more precise and more accurate results.

According to a further advantageous embodiment of the present invention, a sensor system comprises the device of any of the former embodiments and an evaluation unit. The evaluation unit may be a controller.

According to a further advantageous embodiment of the present invention, the sensor system further comprises additional sensors for detecting gas pressure and/or gas temperature, and/or substrate temperature and/or ambient temperature.

According to a further advantageous embodiment of the present invention, the sensor system is for calculating an oxygen partial pressure based on the temperature difference of the membranes of the thermal conductivity sensors.

According to a further advantageous embodiment of the present invention, in the sensor system the calculation of the partial pressure is further based on calibration data of the sensors.

The present invention further relates to a corresponding method for determining a partial pressure of a paramagnetic and/or diamagnetic gas, the method comprising the steps of:
- arranging at least one first thermal conductivity sensor to be exposed to a first magnetic field having a first strength and arranging at least one second sensor to be exposed to a second magnetic field having a second strength wherein each of the first and second thermal conductivity sensors comprises a membrane for being in thermal contact with the gas mixture, the method comprising the following steps:
- associating the partial pressure of the gas to a relation between a value of a thermal conduction between a membrane of the first thermal conductivity sensor and the gas mixture and a value of a thermal conduction between a membrane of the second thermal conductivity sensor and the gas mixture,

- providing a predetermined amount of heat to the membrane by electrical heating elements, the membrane being in thermal contact with the gas;
- determining the temperature of the membrane which is associated with the amount of heat provided by the electrical heating element to the membrane and to the thermal conduction between the membrane and the gas;
- calculating the partial pressure of the gas in response to the temperature of the membrane of the first thermal conductivity sensor and the temperature of the membrane of the second thermal conductivity sensor.

Advantageously the solution enables semi automatic process of determining the partial pressure of a paramagnetic or diamagnetic gas which avoids human errors and provides improved precision and accuracy.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic perspective of a device according to a first embodiment of the present invention;
- **FIG. 2**: is a schematic perspective of the magnetic field created by the permanent magnets of a first embodiment of the present invention;
- **FIG. 3**: shows a schematic perspective of a spatial view of the device shown Fig. 1;
- **FIG. 4**: is a schematic circuit diagram of a detail of the device of the present invention;
- **FIG. 5**: is a schematic circuit diagram of a detail of the device of the present invention;
- **FIG. 6**: is a schematic perspective representation of one of the thermal conductivity sensors placed on a known mounting area;
- **FIG. 7**: is a layout of a thermal conductivity sensor element according to a further embodiment of the present invention;
- **FIG. 8**: is a diagram illustrating the output signal depending on the partial pressure of oxygen for several Wheatstone bridge supply voltages.
- **FIG. 9**: is another diagram illustrating the output signal depending on the partial pressure of oxygen for several magnetic field differences, created by modifying the air gap between the magnet arrays;
- **FIG. 10**: is a diagram illustrating the dependence of the output signal on the magnetic field difference;
- **FIG. 11**: is another diagram illustrating the output signal depending on the partial pressure of oxygen for several orientations of the sensor array relative to the vertical direction at the 0%-Oxygen end of the characteristic;
- **FIG. 12**: shows the same diagram like Fig. 11, but with the signals at the 100%-Oxygen side of the characteristic;
- **FIG. 13**: illustrates the bridge resistance of the Sensor array in dependency on the O₂-content in a N₂-O₂-mixture; this value represents the total thermal conductivity of the gas mixture as additional information for gas analysis.

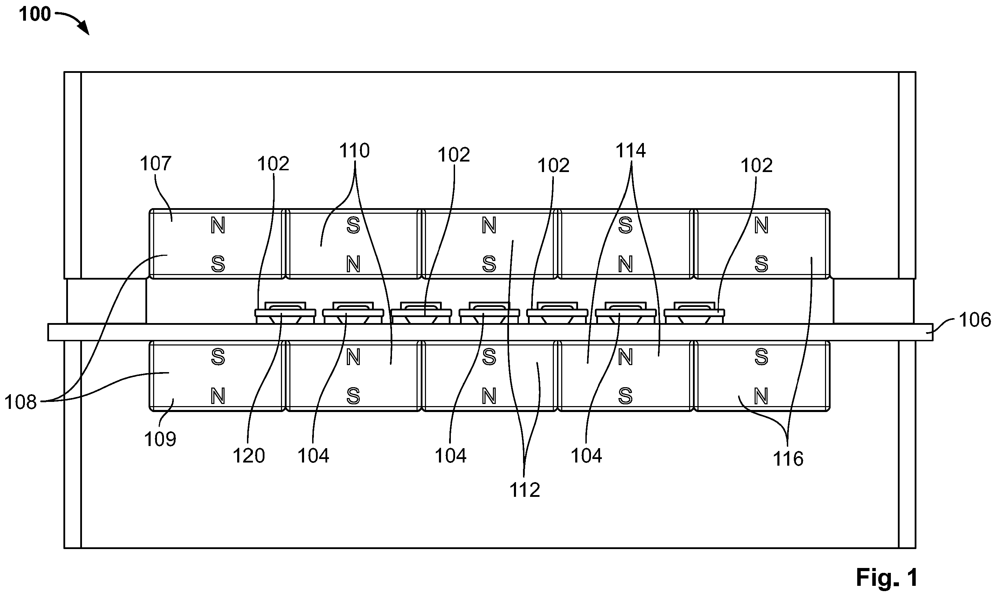

The present invention will now be explained in more detail with reference to the Figures and firstly referring to Fig. 1.

Fig. 1 shows a device 100 for determining a partial pressure of a paramagnetic and/or diamagnetic gas of the present invention. The device comprises four first thermal conductivity sensors 102 arranged to be exposed to a first magnetic field having a first strength and three second thermal conductivity sensors 104 arranged to be exposed to a second magnetic field having a second strength. It shows 10 magnets arranged in five pairs of magnets 108, 110, 112, 114, 116. Each pair of magnets 108, 110, 112, 114, 116 comprises a first magnet 107 and a second magnet 109. The thermal conductivity sensors are placed on a plane 106 located between the first magnets 107 and the second magnets 109 of the pair of magnets 108, 110, 112, 114, 116. Plane 106 is at equal distances from the first and second magnets 107, 109. In other words, the permanent magnets are arranged in pairs 108, 110, 112, 114, 116, each pair is formed by a magnet 107 located above a plane 106 containing the membranes 120 of the thermally conductivity sensors 102, 104 and a magnet 108 located below a plane 106 containing the membranes 120.

The membranes 120 of the thermal conductivity sensors 102, 104 are placed on the plane 106 or in other words in the region between the first magnets 107 and the second magnets 109.

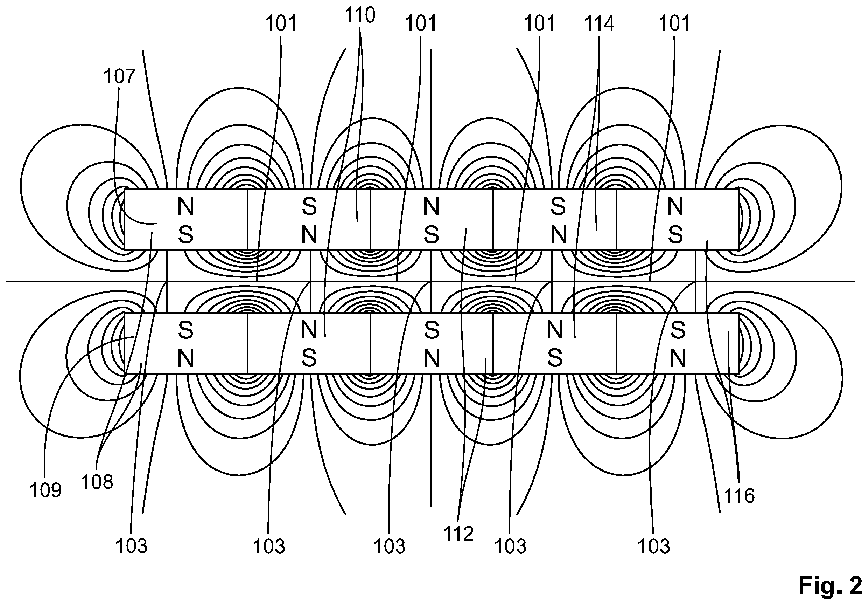

The arrangement of the pairs of magnets 108, 110, 112, 114, 116, disclosed in more detail in Fig. 2, allows to create very large magnetic field gradients of magnetic fields of high strength and low strength on a small space.

The magnets 107 and 109 of each pair 108, 110, 112, 114, 116 create magnetic fields which cancel each other in the center of the region between the magnets 107 and 109. In other words, the directions of magnetization of opposing magnets 107 and 109 are opposite to each other. The second thermal conductivity sensors 104 are placed in the central part of the space between the two magnets 107, 109 of a pair of magnets where the magnetic fields cancel each other.

The magnetic fields created by adjacent pairs of magnets have the same direction in the borders between adjacent pairs of magnets, creating magnetic fields of high strength in the border between adjacent pairs of magnets at the first thermal conductivity sensor position 101 shown in Fig. 2. The first thermal conductivity sensors are placed in the regions of plane 106 (first thermal conductivity sensor positions 101 shown in Fig. 2) corresponding to borders between adjacent pairs of magnets 108, 110, 112, 114, 116. Fig. 2 and Fig. 1 show that the first thermal conductivity sensors 102 are placed in regions (first thermal conductivity sensor positions 101) corresponding to the border between pair of magnets 108 and 110, the border between pair of magnets 110 and 112, the border between pair of magnets 112 and 114 and the border between pair of magnets 114 and 116.

The four first thermal conductivity sensors 102 and the three second thermal conductivity sensors 104 shown in Fig.1 comprise a membrane 120 for being in thermal contact with the gas mixture. The permanent magnets of this solution create alternately an extremely strong field at one sensor position and a field near zero at the adjacent sensor position or in other words at the next sensor position. However the permanent magnets may also be arranged to create magnetic fields of high and low strength at other positions.

The difference between the high and low magnetic field strengths may be 500 kA/m (500000 A/m) or larger. Other values are also possible. The magnetic field strength refers to the auxiliary magnetic field H. The units may be kA/m.

Magnetic flux density B is measured in tesla (in SI base units: kilogram per second2 per ampere), which is equivalent to newton per meter per ampere. H and B differ in how they account for magnetization. In a vacuum, B and H are the same aside from units, but in a magnetized material, B and H differ by the magnetization M of the material at that point in the material.

In Fig. 1 no thermal conductivity sensor is placed between the periphery pairs of magnets, or in other words between the first and the last pair of magnets, in order to avoid edge effects.

Separate thermal conductivity sensors are placed with a little space to each other on a common PCB. Alternately, a common substrate may be used, a common substrate means a (little) array of at least 4 sensors placed on one common silicon chip without gaps in between. In some cases the common substrate may mean an array of at least 2 sensors placed on one common silicon chip without gaps in between. Advantageously, a common substrate allows a further miniaturization of the arrangement and ensures, due to the high thermal conductivity of silicon, a very similar substrate temperature around each membrane.

Fig. 2 is a schematic perspective of the magnetic field created by the permanent magnets of a first embodiment of the present invention represented by magnetic field lines. It shows a permanent magnet array used in a first embodiment of the present invention. Fig. 2 shows first thermal conductivity sensor positions 101 where the first thermal conductivity sensors of Fig. 1 are placed and second thermal conductivity sensor positions 103 where the second thermal conductivity sensors of Fig. 1 are placed. In Fig. 2 four first thermal conductivity sensor positions 101 and five second thermal conductivity sensor positions 103 are shown. The array consists of the magnet pairs 108, 110, 112, 114 and 116. On the center plane 106 of the array there are regions with very strong fields between the magnet pairs referred to as first thermal conductivity sensor positions 101 which are used for the placement of first thermal conductivity sensors and, nearly zero field regions between the magnets of each pair referred to as second thermal conductivity sensor positions 103 which are used for the placement of second thermal conductivity sensors. Fig. 2 shows five magnet pairs 108, 110, 112, 114 and 116, however, other number of pair of magnets and other number of first and second thermal conductivity sensor positions 101, 103 may be used.

The arrangement of the pairs of magnets 108, 110, 112, 114, 116 allows to create very large magnetic field gradients of magnetic fields of high strength and low strength on a small space.

The arrangement of permanent magnets shown in Fig. 2 can also be modified by for example arranging the pairs of magnets such that the magnetization directions of opposing magnets 107, 109 is parallel to each other.

The arrangement of pairs of magnets can also be modified such that the magnets 107, 109 of each pair of magnets are arranged on the side of the plane 106 containing the membrane.

Fig. 2 also shows the edge effects occurring at the pairs of magnets placed on the extremes.

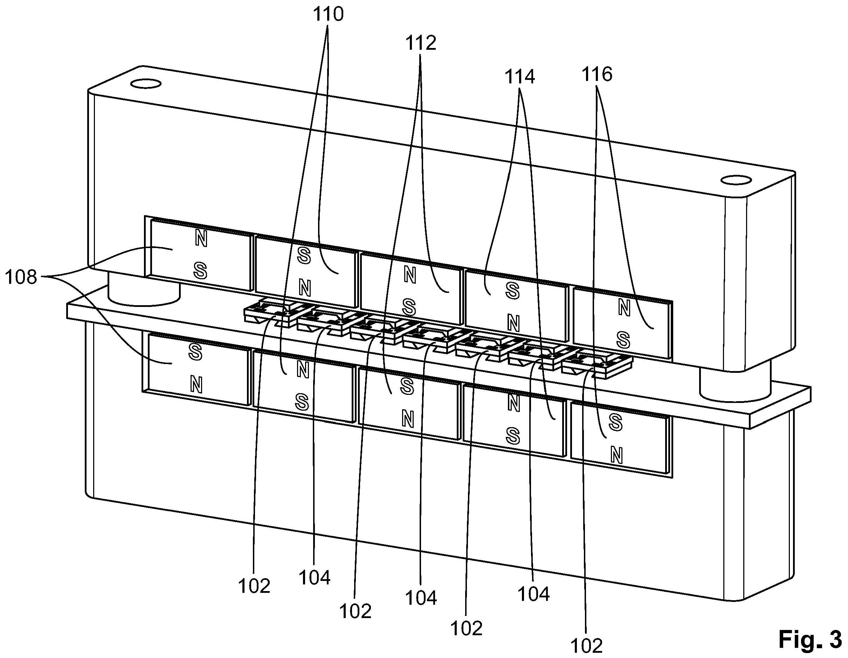

Fig. 3 shows visual representation of a 3-D-shape of the device. It is a schematic perspective of a sensor array of the present invention comprising four first thermal conductivity sensors and three second thermal conductivity sensors. The permanent magnets are arranged in pairs of magnets (as disclosed in Fig. 2) providing the thermal conductivity sensors with magnetic fields of high and slow strengths alternately. Heating elements (resistors) for heating the membrane of the thermal conductivity sensors may be connected to a Wheatstone bridge. In the presence of non-magnetic gases (non paramagnetic or diamagnetic gases) all sensors provide the same signal. In the presence of a paramagnetic gas such as Oxygen (or a diamagnetic gas) the thermal conductivity is different depending on the presence or absence of a magnetic field, or in other words depending on the presence of a magnetic field of a high strength or of a low strength. The Wheatstone bridge is detuned and creates an output signal proportional to the partial pressure of O₂.

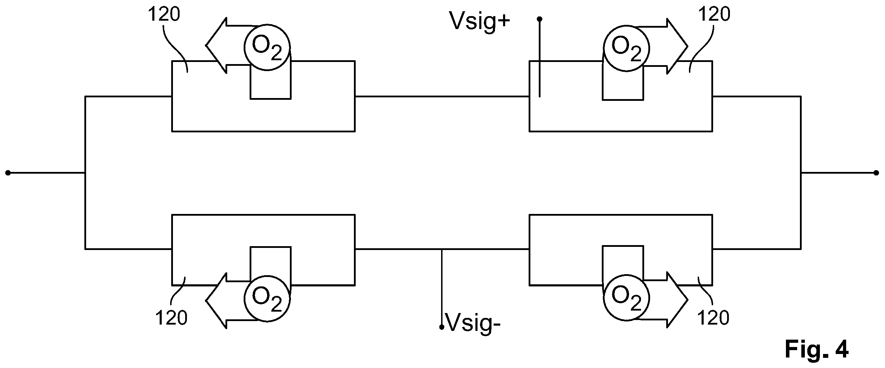

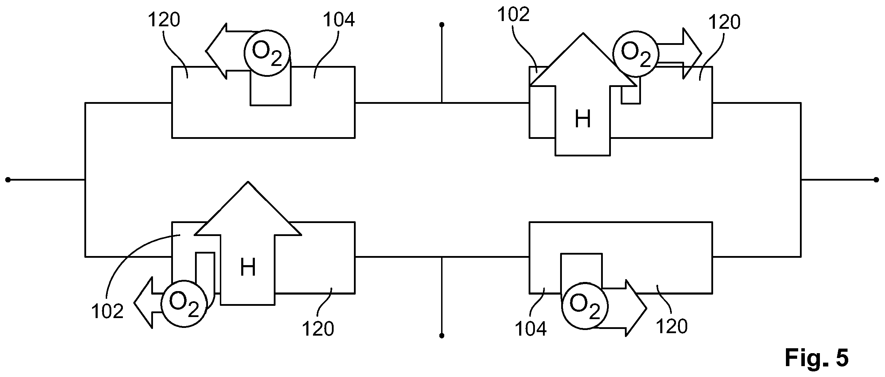

Fig. 4 and Fig. 5 are schematic circuit diagrams of a detail of the device showing that in the absence (Fig. 4) of a magnetic field of a high strength the thermal conduction between the membranes of the first and second thermal conductivity sensors and the gas mixture is the same. It shows the function of the Wheatstone bridge assembly.

In the presence of a magnetic field (Fig. 5) of a high strength H, the interaction between molecules and the magnetic field disturbs the free movement of the gas molecules. This effect causes a decrease of the thermal conductivity of the gas surrounding the first thermal conductivity sensors 102. In the region exposed to a magnetic field of a low strength where the second thermal conductivity sensor is placed, the thermal conductivity of the gas is not decreased.

When a paramagnetic gas is present in a gas mixture, the interaction between molecules and the magnetic field disturbs the free movement of the gas molecules causes a decrease in the thermal conductivity of the gas surrounding the first thermal conductivity sensors which results in a the membrane transmitting less amount of heat to the gas and thus is a higher temperature of the membrane. If the heating elements transmit the predetermined amount of heat to the membranes of the first and the second thermal conductivity sensors, the difference in temperature of the membranes, once the membranes have stabilized the thermal contact with the gas, is associated with the thermal conductivity of the gas. In other words, the lower the thermal conductivity of the gas the less heat conducted from the membrane to the gas and the higher the final temperature of the membrane in thermal contact with the gas.

The heating elements may simultaneously be used as resistors used to measure the temperature of the membranes. In other words, resistors used to measure the temperatures of the membranes may also be used as heating elements.

The thermal conductivity of the gas can also be measured by measuring the amount of heat needed to be provided by the heating elements to the membranes in order for the membranes to achieve a predetermined temperature, in which case the lower the thermal conductivity of the gas the less amount of heat needed to be transmitted from the heating element to the membrane to acquire the target temperature.

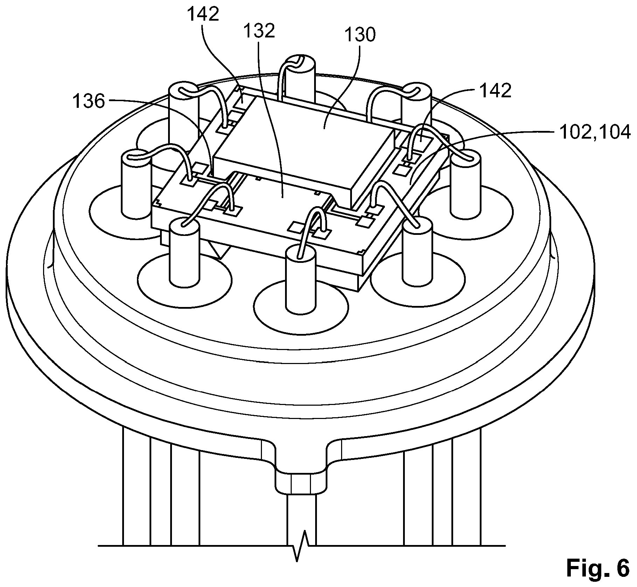

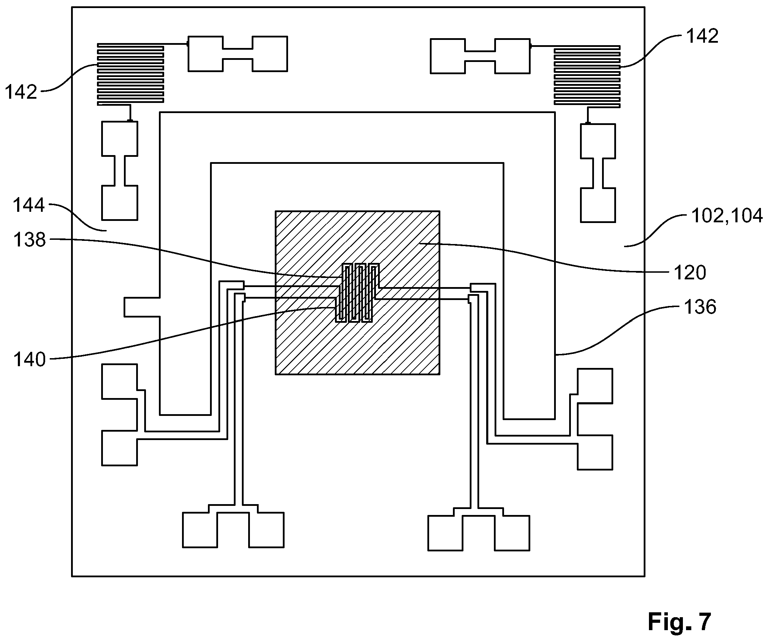

Fig 6. shows one of the thermal conductivity sensors placed on a known mounting area. The sensor stack comprises a horseshoe-shaped mounting area for cover 136, a membrane and a cover 130 on top for creating a defined thermal flux volume. A more detailed horseshoe-shaped mounting area for cover 136 is shown in Fig. 7. On a frame 144 around the membrane there are additional resistors 142 for measuring the ambient temperature. The cover 130 may also be referred to as a cap. The cover 130 forms a measurement volume in the space between the membrane and the cover, the cover having a cavity 132 arranged for the gas entering into the measurement volume by diffusion. The membrane 120 of a thermal conductivity sensor 102, 104 is more clearly shown in Fig. 7.

Fig 7. shows an example of a thermal conductivity sensor 102, 104 of the present invention comprising a membrane 120. It shows a thermal conductivity sensor 102, 104 of Figures 2, 3. It shows a membrane chip 144. A substrate is shown as a square (silicon) block with center hole, on which all the structures including the membrane are present as thin material layers. A membrane chip 144 and a substrate 144 may be referred as nearly the same.

The membrane chip 144 contains two nested resistors for heating or for measuring the membrane temperature 138, 140 (resistors for heating or membrane temperature measurement). The resistors for heating or for measuring the membrane temperature 138, 140 are resistors on the membrane 120, which can be connected to one heater or which can be used separately as heater and temperature sensor. Resistors for heating or for measuring the membrane temperature 138, 140 may be also referred as heating elements 138, 140. Resistors for measuring ambient temperature 142 are also shown. The heating elements 138, 140 (resistors for heating the membrane or for measuring the membrane temperature) of the thermal conductivity sensors 102, 104 are connected with the according resistors of adjacent sensor chips to a Wheatstone bridge. On the frame 144 around the membrane there are additional resistors 142 which can be used for measuring the ambient temperature.

In Fig. 7 resistors for heating the membrane or for measuring the membrane temperature 138, 140 are be used (in line) as one heater resistor. The one heater resistor is one of the four resistors of the Wheatstone bridge. The other three resistors are the heaters of three other membranes of sensors in the array. Two heater resistors on the membrane are used in order to be flexible with the operating mode of the sensor. For example, they may allow to heat with one resistor and measure the resulting temperature with the other. In the example shown in Fig. 7 small differences between the sensors may be measured. In such case a Wheatstone bridge may be an useful and simple operating mode.

A common substrate is not shown in the Figures. Only separate thermal conductivity sensors are shown. A common substrate (not shown in the Figures) may be placed with a little space to each other on a common PCB. The expression common substrate means a little array of at least 4 sensors as shown in Figure 7 placed on one common silicon chip without gaps in between. This allows a further miniaturization of the whole arrangement. It also ensures, due to the high thermal conductivity of silicon, a very similar substrate temperature around each membrane.

Fig. 7 shows a layout of the membrane chip 144. Membrane chip 144 and substrate may be referred to as nearly the same. A substrate is the square silicon block with a center hole, on which all the structures including the membrane are present as thin material layers.

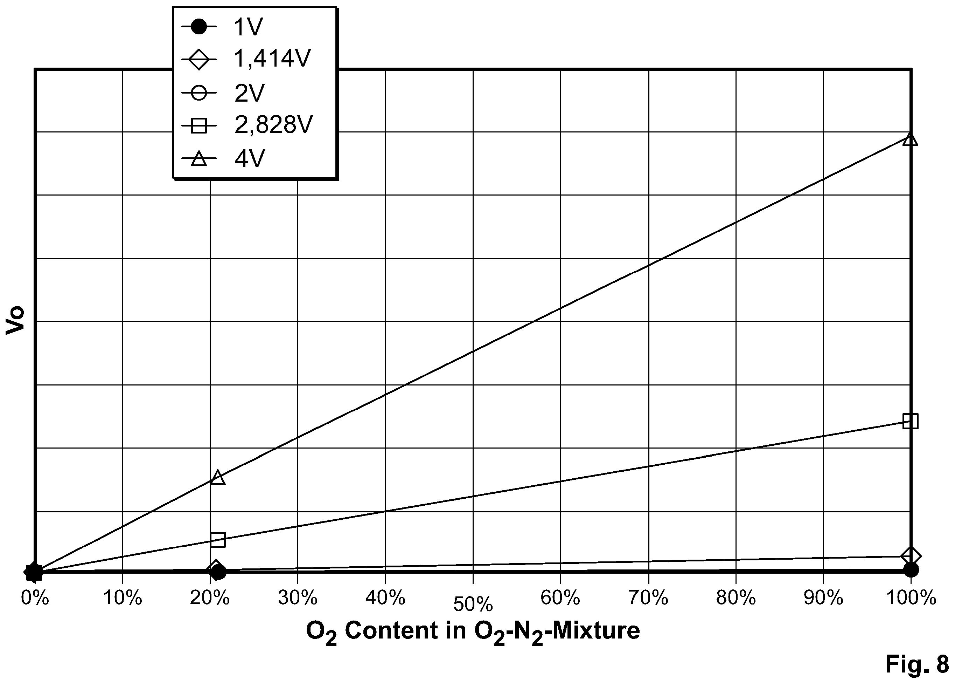

Fig. 8 is a diagram illustrating the output signal depending on the partial pressure of oxygen. It shows the maximum output voltage O₂ sensor array bridge depending on O₂ content in N₂ for several supply voltages. The several supply voltages may be Wheatstone bridge supply voltages. It is an example of a thermally conductive sensor signal depending on O₂ content or in other words partial pressure for several bridge supply voltages. The sensor bridge is connected to several supply voltages and the output voltage is measured for all three gas variations. To compensate for drift effects, each gas is measured several times in a defined sequence (Air-O₂-N₂-Air-N₂-O₂-Air). The measurements is averaged and the offset is adjusted for 0 mV at N₂.

Surprisingly, when changing the supply voltage of the bridge of heating elements of the membrane, the output signal changes with the third power. In order to value the linearity, the O₂-content in air is calculated from all three measurement points for all supply voltages, resulting in 22,04 - 22,60% O₂-content. The distance between the magnet bars and the sensors is increased by washers placed at the screw connections.

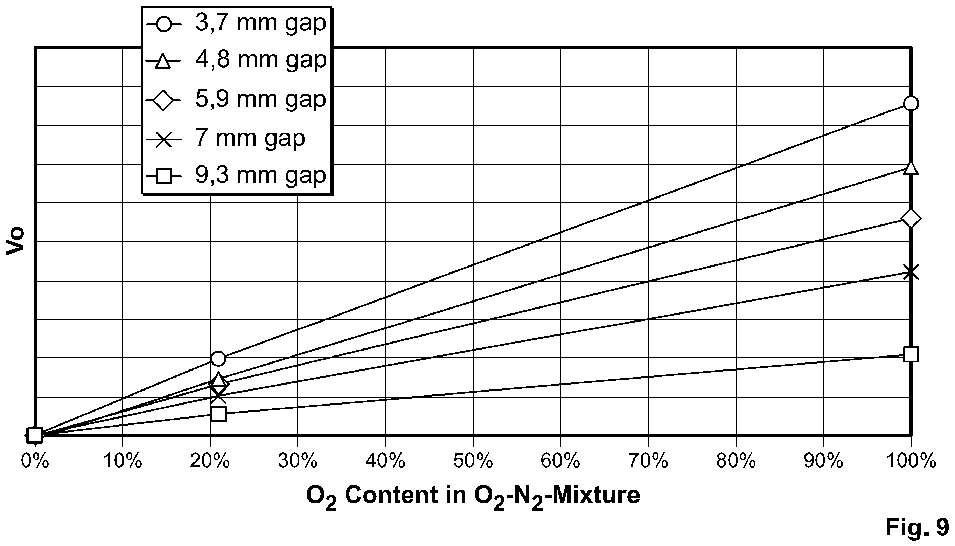

Fig. 9 shows a thermally conductive sensor signal depending on O₂ content for several air gaps in the magnet system. It shows output voltage O₂ sensor array bridge depending on O₂ content in N₂ for several magnets air gaps. It illustrates the output signal depending on the partial pressure of oxygen for several magnetic field differences, created by modifying the air gap between the magnet arrays. The influence of increasing the distance between the magnet bars and the sensors, by washers placed at the screw connections is shown. It shows the thermally conductive sensor sensitivity depending on the O₂ content for several magnetic fields.

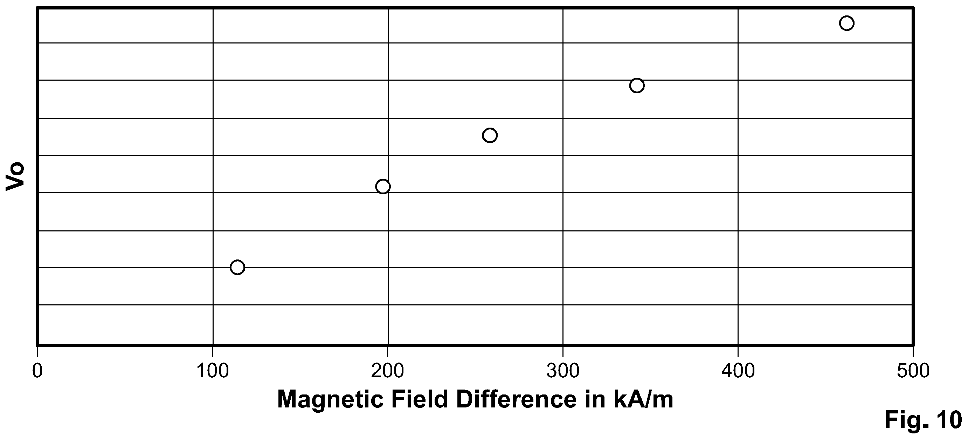

Fig. 10 shows an example of a diagram of the dependence of the sensitivity on the magnetic field at the high field positions. It shows an example of a signal of the thermally conductivity sensor bridge in oxygen depending on the magnetic field difference or in other words depending on the difference between a high magnetic field strength and a low magnetic field strength.

Surprisingly, up to approximately 400 kA/m (approximately 0.5 T) the sensitivity depends nearly linear on the field strength difference. At stronger fields the slope becomes (slightly) lower, which may indicate a beginning saturation. Surprisingly the fields created with the permanent magnets of the invention are around 0.5 to 1 T. Preferably the magnet system for the creation of magnetic fields is as strong as possible using permanent magnets in order to maximize the sensitivity.

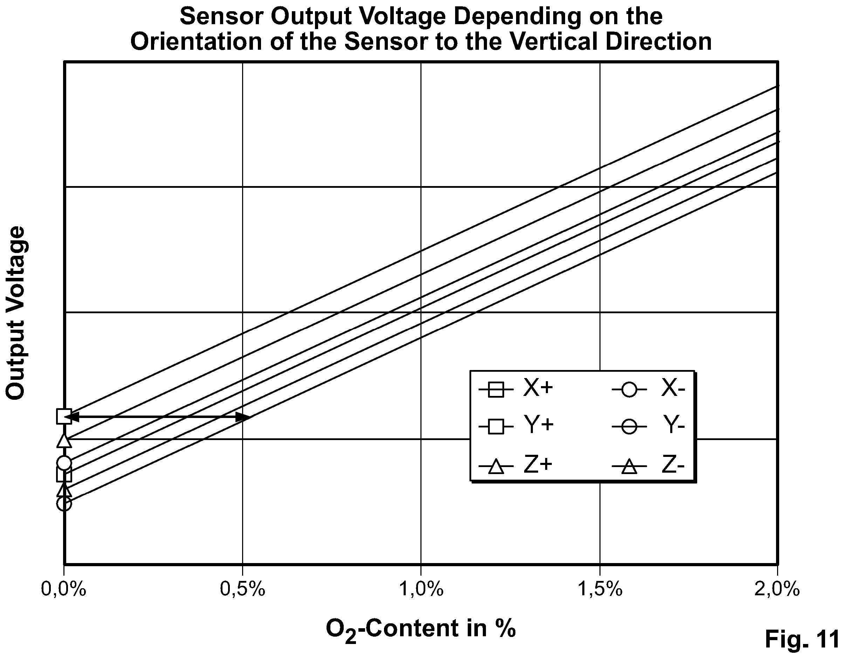

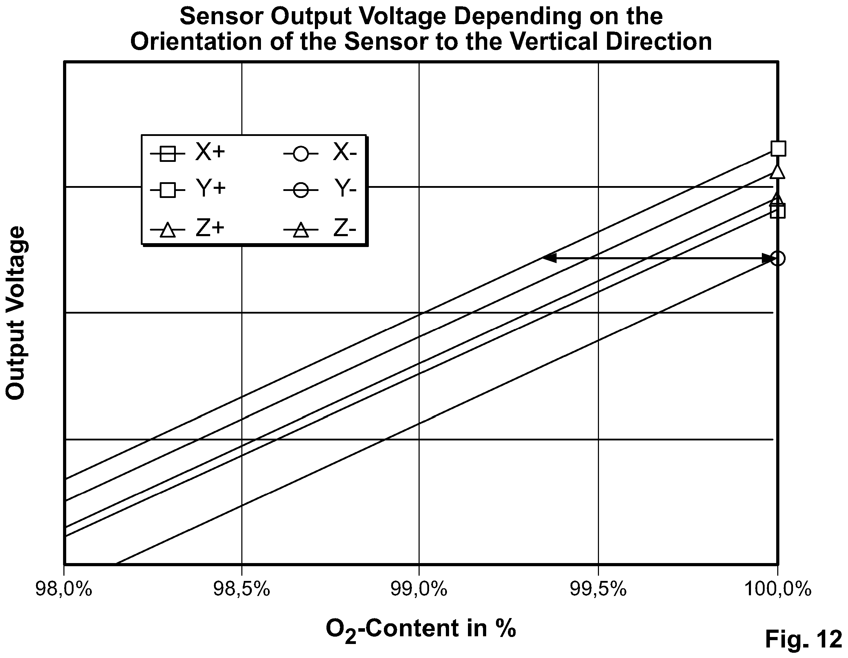

Fig. 11 and Fig. 12 show characteristic curves for several orientations of the sensor array to the vertical. They show a sensor output voltage depending on the orientation of the sensor to the vertical direction.

Surprisingly the dependence of the sensor characteristic curve on the orientation of the sensor to the vertical is small. Advantageously the device of the invention suppresses heat transport by convection, significantly avoiding its influences on the membrane temperatures.

The diagrams show the lower and upper end of the characteristic curves depending on the orientation of the sensor to the vertical. The X direction is perpendicular to the PCB (Printed Circuit Board) plane, where in the X- orientation the sensor chip is on the bottom side of the PCB. The Y direction is along the sensor length. The Z orientation is in chip plane, but orthogonal to the sensor-direction. In Z- orientation the cap openings of the sensor caps show upside.

The characteristic curves are straight lines, fit to the measurement values. The double arrow indicates the maximum differences between the O₂ percentages depending on the sensor orientation at one output voltage. Surprisingly the orientation caused range of the real O₂ percentage for a certain signal voltage is always less than approx. +/- 0.35 % .

The strongest dependence of the sensor signals on the position is observed with an orientation with the sensor longitudinal direction (Y) in the vertical. In the device of this invention a convective heat flow from the lower sensor elements to the upper ones is avoided, so as to avoid a temperature increase of the upper sensors compared to the lower ones and thus to a little detuning of the sensor bridge. Advantageously a thermal coupling of the sensor elements via a monolithic structure with a common heat conducting frame reduces this effect.

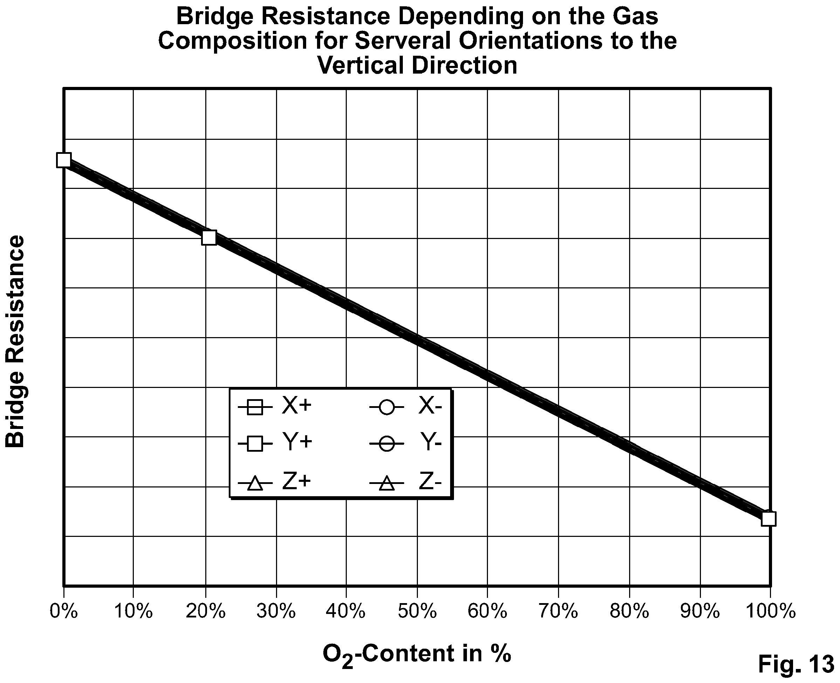

Fig. 13 shows bridge resistance depending on the gas composition for several orientations to the vertical direction. It provides information on the dependency of the total bridge resistance on the orientation. This value gives direct information about the thermal conductivity of the gas. For example, this is not important for the distinction between N₂ and O₂, because the difference in the thermal conductivities of both gases is only minor of approximately N₂: 0,0260 W/(mK), O₂: 0,0263 W/(mK). The measurement of the absolute thermal conductivity of the gas provides additional information about especially a CO₂ or H₂ content in the air. Advantageously the orientation does not affect the measurement of the thermal conductivity. The device of the invention avoids problems related to interferences with the ambient by for example compensating for the ambient temperature, which may be more significant than the sensor orientation to the vertical.

Surprisingly the thermal conductivity sensor of the invention provides a signal amplitude sufficient to reach an accuracy of approximately 1% O₂- concentration in air. The device of the invention is robust to its orientation to the vertical direction. Further to the O2-detection the device of the invention is able to measure the thermal conductivity of the gas mixture, which provides information about an H₂ or CO₂-content.

### REFERENCE NUMERALS

| **Reference Numeral** | **Description** |
|---|---|
| 100 | device |
| 101 | first thermal conductivity sensor position |
| 102 | first thermal conductivity sensor |
| 103 | second thermal conductivity sensor position |
| 104 | second thermal conductivity sensor |
| 106 | plane |
| 107 | first magnet |
| 108 | pair of magnets |
| 109 | second magnet |
| 110 | pair of magnets |
| 112 | pair of magnets |
| 114 | pair of magnets |
| 116 | pair of magnets |
| 118 | pair of magnets |
| 120 | membrane / hole in substrate |
| 122 | sensor |
| 124 | gas inlet |
| 126 | test chamber |
| 128 | gas exhaust |
| 130 | cover |
| 132 | cavity |
| 134 | Wheatstone bridge |
| 136 | mounting area for cover |
| 138 | resistor for heating or membrane temperature measurement |
| 140 | resistor for heating or membrane temperature measurement |
| 142 | resistor for ambient temperature measurement |
| 144 | substrate (silicon sensor chip) |
| 146 | common substrate |

## Claims

1. Device (100) for determining a partial pressure of a paramagnetic and/or diamagnetic gas in a gas mixture, comprising:
at least two pairs (108, 110, 112, 114, 116) of permanent magnets arranged adjacent to each other for generating a first magnetic field having a first strength and a second magnetic field having a second strength lower than the first strength;
at least one first thermal conductivity sensor (102) arranged to be exposed to the first magnetic field and at least one second thermal conductivity sensor (104) arranged to be exposed to the second magnetic field, wherein each of the first and second thermal conductivity sensors (102, 104) comprises:
• a membrane (120) for being in thermal contact with the gas mixture, wherein the partial pressure of the gas is associated with a relation between a value of a thermal conduction between the membrane (120) of the first thermal conductivity sensor (102) and the gas mixture and a value of a thermal conduction between the membrane (120) of the second thermal conductivity sensor (104) and the gas mixture;
• an electrical heating element (138, 140) for providing a predetermined amount of heat to the membrane; and
• means (138, 140) for determining the temperature of the membrane which is associated with the amount of heat provided by the electrical heating element to the membrane and to the thermal conduction between the membrane and the gas; and
means for calculating the partial pressure of the paramagnetic and/or diamagnetic gas in response to the temperature of the membrane of the first thermal conductivity sensor and the temperature of the membrane of the second thermal conductivity sensor (104);
wherein the permanent magnets of each pair are respectively arranged above and below a plane (106) containing the membrane (120);
wherein the directions of magnetization of the two permanent magnets of each of the at least two pairs of permanent magnets are opposite to each other;
wherein permanent magnets adjacent to each other create magnetic fields having the same direction in the region near the border between them; and
wherein the at least one first thermal conductivity sensor (102) is placed in the region of the plane (106) corresponding to borders between adjacent pairs of permanent magnets and the at least one second thermal conductivity sensor (104) is placed in the central part of the space between the permanent magnets of each pair.

2. Device according to claim 1, wherein the membrane (120) of the first and second thermal conductivity sensor (104) has a cover (130) forming a measurement volume in the space between the membrane and the cover (130), the cover having a cavity (132) arranged for the gas entering into the measurement volume by diffusion.

3. Device according to any of claims 1 or 2, wherein the thermal conductivity sensors are constructed with thin film technology and/or the thermal conductivity sensors are constructed with nanowire technology.

4. Device according to any of claims 1 to 3, wherein the thermal conductivity sensors (102, 104) are thermally coupled to one another by means of a common substrate or a common carrier plate.

5. Device according to any of claims 1 to 4, wherein a difference between the temperature value of the membrane (120) of the first thermal conductivity sensor (102) and a temperature value of the membrane (120) of the second thermal conductivity sensor (104) is determined by means of thermocouples; wherein the partial pressure of the paramagnetic or diamagnetic gas is determined based on the difference between the temperature value of the membrane (120) of the first thermal conductivity sensor (102) and the temperature value of the membrane (120) of the second thermal conductivity sensor (104) measured with the thermocouples.

6. Device according to any of claims 1 to 5, wherein a temperature of the membrane (120) of the first thermal conductivity sensor (102) and the temperature of the membrane (120) of the second thermal conductivity sensor (104) are compared to each other by means of comparing a value of a resistance arranged on the membrane (120) of the first thermal conductivity sensor (102) and a value of a resistance arranged on the membrane (120) of the second thermal conductivity sensor (104), the resistances being arranged on the membranes (120) by means of an interconnection of the thermally conductivity sensors (102, 104) which forms one or more voltage dividers or a Wheatstone bridge circuit.

7. Device according to any of claims 1 to 6, wherein thermocouples are arranged to determine a temperature difference between a temperature of a substrate 144 of the first thermal conductivity sensor (102) and the temperature of the membrane (120) of the first thermal conductivity sensor (102) and a temperature difference between a temperature of a substrate 144 of the second thermal conductivity sensor (104) and the temperature of the membrane (120) of the second thermal conductivity sensor (104); wherein the thermocouples are interconnected such that a signal associated with a difference between the temperature of the membranes (120) is generated, wherein the partial pressure of the gas is associated with the signal.

8. Device according to any of claims 1 to 7, wherein a temperature of the membrane (120) of the first thermal conductivity sensor (102) and the temperature of the membrane (120) of the second thermal conductivity sensor (104) are compared to each other by means of comparing a value of a resistance arranged on the membrane (120) of the first thermal conductivity sensor (102) and a value of a resistance arranged on the membrane (120) of the second thermal conductivity sensor (104), wherein the resistances for comparing the temperatures of the membranes (120) of the first and second thermally conductivity sensors (102, 104) are further configured to be used as the electrical heating elements for heating the membranes (120) of the first and second thermally conductive sensors.

9. Device according to any of claims 1 to 8, further comprising means arranged on the thermal conductivity sensors to allow the adjustment of a signal offset by laser trimming.

10. Device according to any of claims 1 to 9, wherein the magnetic fields generated by the permanent magnets are influenced by ferromagnetic flux conductors positioned on at least one of the thermal conductivity sensor substrate or membrane (120).

11. Device according to any of claims 1 to 10, wherein the permanent magnets used for generating the magnetic fields are positioned on at least one of the thermal conductivity sensor substrate or membrane (120).

12. Device according to any of claims 1 to 11, wherein the at least two permanent magnets are arranged such that the magnetic fields created above and below the membrane (120) by the at least two permanent magnets have a direction substantially perpendicular to the direction of the heat flow between the membrane (120) and the gas.

13. Sensor system comprising a device according to any one of claims 1 to 12, the sensor system further comprising:
an evaluation unit; and/or
additional sensors for detecting gas pressure and/or gas temperature, and/or substrate temperature and/or ambient temperature; and/or
wherein the calculation of the partial pressure is further based on calibration data of the sensors.

14. A method for determining a partial pressure of a paramagnetic and/or diamagnetic gas in a gas mixture, the method comprising the steps of:
arranging at least two pairs of permanent magnets adjacent to each other for generating a first magnetic field having a first strength and a second magnetic field having a second strength lower than the first strength, wherein the permanent magnets of each pair are respectively arranged above and below a plane containing the membrane (120);
arranging at least one first thermal conductivity sensor (102) to be exposed to a first magnetic field having a first strength and arranging at least one second sensor to be exposed to a second magnetic field having a second strength, wherein each of the first and second thermal conductivity sensors (102, 104) comprises a membrane (120) for being in thermal contact with the gas mixture;
associating the partial pressure of the paramagnetic and/or diamagnetic gas to a relation between a value of a thermal conduction between a membrane (120) of the first thermal conductivity sensor (102) and the gas mixture and a value of a thermal conduction between a membrane (120) of the second thermal conductivity sensor (102, 104) and the gas mixture;
providing a predetermined amount of heat to the membrane (120) by electrical heating elements;
determining the temperature of the membrane which is associated with the amount of heat provided by the electrical heating element to the membrane (120) and to the thermal conduction between the membrane (120) and the gas; and
calculating the partial pressure of the gas in response to the temperature of the membrane (120) of the first thermal conductivity sensor (102) and the temperature of the membrane (120) of the second thermal conductivity sensor (104);
wherein the directions of magnetization of the two permanent magnets of each of the at least two pairs of permanent magnets are opposite to each other;
wherein permanent magnets adjacent to each other create magnetic fields having the same direction in the region near the border between them; and
placing the at least one first thermal conductivity sensor (102) in the region of the plane (106) corresponding to borders between adjacent pairs of permanent magnets and placing the at least one second thermal conductivity sensor (104) in the central part of the space between the permanent magnets of each pair.

## Patentansprüche

1. Vorrichtung (100) zur Bestimmung eines Partialdrucks eines paramagnetischen und/oder diamagnetischen Gases in einem Gasgemisch, umfassend
mindestens zwei Paare (108, 110, 112, 114, 116) von Permanentmagneten, die nebeneinander angeordnet sind, um ein erstes Magnetfeld mit einer ersten Stärke und ein zweites Magnetfeld mit einer zweiten Stärke, die geringer als die erste Stärke ist, zu erzeugen;
mindestens einen ersten Wärmeleitfähigkeitssensor (102), der so angeordnet ist, dass er dem ersten Magnetfeld ausgesetzt ist, und mindestens einen zweiten Wärmeleitfähigkeitssensor (104), der so angeordnet ist, dass er dem zweiten Magnetfeld ausgesetzt ist, wobei jeder der ersten und zweiten Wärmeleitfähigkeitssensoren (102, 104) umfasst:
• eine Membran (120), die in thermischem Kontakt mit dem Gasgemisch steht, wobei der Partialdruck des Gases einer Beziehung zwischen einem Wert einer Wärmeleitung zwischen der Membran (120) des ersten Wärmeleitfähigkeitssensors (102) und dem Gasgemisch und einem Wert einer Wärmeleitung zwischen der Membran (120) des zweiten Wärmeleitfähigkeitssensors (104) und dem Gasgemisch zugeordnet ist;
• ein elektrisches Heizelement (138, 140) zum Bereitstellen einer vorbestimmten Wärmemenge für die Membran; und
• Mittel (138, 140) zum Bestimmen der Temperatur der Membran, die der Wärmemenge zugeordnet ist ist, die von dem elektrischen Heizelement an die Membran und an die Wärmeleitung zwischen der Membran und dem Gas abgegeben wird; und
Mittel zum Berechnen des Partialdrucks des paramagnetischen und/oder diamagnetischen Gases in Abhängigkeit von der Temperatur der Membran des ersten Wärmeleitfähigkeitssensors und der Temperatur der Membran des zweiten Wärmeleitfähigkeitssensors (104);
wobei die Permanentmagnete jedes Paares jeweils über und unter einer Ebene (106) angeordnet sind, die die Membran (120) enthält;
wobei die Magnetisierungsrichtungen der beiden Permanentmagnete jedes der mindestens zwei Paare von Permanentmagneten einander entgegengesetzt sind;
wobei einander benachbarte Dauermagnete in dem Bereich nahe der Grenze zwischen ihnen Magnetfelder mit derselben Richtung erzeugen; und
wobei der mindestens eine erste Wärmeleitfähigkeitssensor (102) in dem Bereich der Ebene (106) angeordnet ist, der den Grenzen zwischen benachbarten Paaren von Dauermagneten entspricht, und der mindestens eine zweite Wärmeleitfähigkeitssensor (104) in dem zentralen Teil des Raums zwischen den Dauermagneten jedes Paares angeordnet ist.

2. Vorrichtung nach Anspruch 1, wobei die Membran (120) des ersten und zweiten Wärmeleitfähigkeitssensors (104) eine Abdeckung (130) aufweist, die in dem Raum zwischen der Membran und der Abdeckung (130) ein Messvolumen bildet, wobei die Abdeckung einen Hohlraum (132) aufweist, der so angeordnet ist, dass das Gas durch Diffusion in das Messvolumen gelangt.

3. Vorrichtung nach einem der Ansprüche 1 oder 2, wobei die Wärmeleitfähigkeitssensoren mit Dünnschichttechnologie und/oder die Wärmeleitfähigkeitssensoren mit Nanodrahttechnologie hergestellt sind.

4. Vorrichtung nach einem der Ansprüche 1 bis 3, wobei die Wärmeleitfähigkeitssensoren (102, 104) über ein gemeinsames Substrat oder eine gemeinsame Trägerplatte thermisch miteinander gekoppelt sind.

5. Vorrichtung nach einem der Ansprüche 1 bis 4, wobei eine Differenz zwischen dem Temperaturwert der Membran (120) des ersten Wärmeleitfähigkeitssensors (102) und einem Temperaturwert der Membran (120) des zweiten Wärmeleitfähigkeitssensors (104) mit Hilfe von Thermoelementen ermittelt wird; wobei der Partialdruck des paramagnetischen oder diamagnetischen Gases auf der Grundlage der Differenz zwischen dem Temperaturwert der Membran (120) des ersten Wärmeleitfähigkeitssensors (102) und dem Temperaturwert der Membran (120) des zweiten Wärmeleitfähigkeitssensors (104), gemessenen mit den Thermoelementen, bestimmt wird.

6. Vorrichtung nach einem der Ansprüche 1 bis 5, wobei eine Temperatur der Membran (120) des ersten Wärmeleitfähigkeitssensors (102) und die Temperatur der Membran (120) des zweiten Wärmeleitfähigkeitssensors (104) miteinander verglichen werden, indem ein Wert eines auf der Membran (120) des ersten Wärmeleitfähigkeitssensors (102) angeordneten Widerstandes und ein Wert eines auf der Membran (120) des zweiten Wärmeleitfähigkeitssensors (104) angeordneten Widerstandes verglichen werden, wobei die Widerstände auf den Membranen (120) mittels einer Zusammenschaltung der Wärmeleitfähigkeitssensoren (102, 104) angeordnet sind, die einen oder mehrere Spannungsteiler oder eine Wheatstone-Brückenschaltung bildet.

7. Vorrichtung nach einem der Ansprüche 1 bis 6, wobei Thermoelemente so angeordnet sind, dass sie eine Temperaturdifferenz zwischen einer Temperatur eines Substrats 144 des ersten Wärmeleitfähigkeitssensors (102) und der Temperatur der Membran (120) des ersten Wärmeleitfähigkeitssensors (102) und eine Temperaturdifferenz zwischen einer Temperatur eines Substrats 144 des zweiten Wärmeleitfähigkeitssensors (104) und der Temperatur der Membran (120) des zweiten Wärmeleitfähigkeitssensors (104) bestimmen; wobei die Thermoelemente so miteinander verbunden sind, dass ein mit einer Differenz zwischen der Temperatur der Membranen (120) zugeordnetes Signal erzeugt wird, wobei der Partialdruck des Gases mit dem Signal zugeordnet ist.

8. Vorrichtung nach einem der Ansprüche 1 bis 7, wobei eine Temperatur der Membran (120) des ersten Wärmeleitfähigkeitssensors (102) und die Temperatur der Membran (120) des zweiten Wärmeleitfähigkeitssensors (104) miteinander verglichen werden, indem ein Wert eines an der Membran (120) des ersten Wärmeleitfähigkeitssensors (102) angeordneten Widerstands und ein Wert eines an der Membran (120) des zweiten Wärmeleitfähigkeitssensors (104) angeordneten Widerstands verglichen werden, wobei die Widerstände zum Vergleich der Temperaturen der Membranen (120) des ersten und des zweiten Wärmeleitfähigkeitssensors (102, 104) ferner so konfiguriert sind, dass sie als die elektrischen Heizelemente zum Erwärmen der Membranen (120) des ersten und des zweiten Wärmeleitfähigkeitssensors verwendet werden.

9. Vorrichtung nach einem der Ansprüche 1 bis 8, ferner mit Mitteln, die an den Wärmeleitfähigkeitssensoren angeordnet sind, um die Einstellung eines Signaloffsets durch Lasertrimmung zu ermöglichen.

10. Vorrichtung nach einem der Ansprüche 1 bis 9, wobei die von den Permanentmagneten erzeugten Magnetfelder von ferromagnetischen Flussleitern beeinflusst werden, die auf mindestens einem von dem Substrat des Wärmeleitfähigkeitssensors oder der Membran (120) angeordnet sind.

11. Vorrichtung nach einem der Ansprüche 1 bis 10, wobei die zur Erzeugung der Magnetfelder verwendeten Dauermagnete auf mindestens einem von dem Substrat des Wärmeleitfähigkeitssensors oder der Membran (120) angeordnet sind.

12. Vorrichtung nach einem der Ansprüche 1 bis 11, wobei die mindestens zwei Permanentmagnete so angeordnet sind, dass die von den mindestens zwei Permanentmagneten oberhalb und unterhalb der Membran (120) erzeugten Magnetfelder eine Richtung haben, die im Wesentlichen senkrecht zur Richtung des Wärmeflusses zwischen der Membran (120) und dem Gas verläuft.

13. Sensorsystem mit einer Vorrichtung nach einem der Ansprüche 1 bis 12, wobei das Sensorsystem ferner umfasst:
eine Auswerteeinheit; und/oder
zusätzliche Sensoren zur Erfassung des Gasdrucks und/oder der Gastemperatur und/oder der Substrattemperatur und/oder der Umgebungstemperatur; und/oder
wobei die Berechnung des Partialdrucks ferner auf den Kalibrierungsdaten der Sensoren beruht.

14. Verfahren zur Bestimmung eines Partialdrucks eines paramagnetischen und/oder diamagnetischen Gases in einem Gasgemisch, wobei das Verfahren die folgenden Schritte umfasst:
Anordnen von mindestens zwei Paaren von Permanentmagneten nebeneinander zum Erzeugen eines ersten Magnetfeldes mit einer ersten Stärke und eines zweiten Magnetfeldes mit einer zweiten Stärke, die geringer ist als die erste Stärke, wobei die Permanentmagnete jedes Paares jeweils über und unter einer Ebene angeordnet sind, die die Membran (120) enthält;
Anordnen mindestens eines ersten Wärmeleitfähigkeitssensors (102), um einem ersten Magnetfeld mit einer ersten Stärke ausgesetzt zu werden, und Anordnen mindestens eines zweiten Sensors, um einem zweiten Magnetfeld mit einer zweiten Stärke ausgesetzt zu werden, wobei jeder der ersten und zweiten Wärmeleitfähigkeitssensoren (102, 104) eine Membran (120) umfasst, um in thermischem Kontakt mit dem Gasgemisch zu sein;
Zuordnen des Partialdrucks des paramagnetischen und/oder diamagnetischen Gases zu einer Beziehung zwischen einem Wert einer Wärmeleitung zwischen einer Membran (120) des ersten Wärmeleitfähigkeitssensors (102) und der Gasmischung und einem Wert einer Wärmeleitung zwischen einer Membran (120) des zweiten Wärmeleitfähigkeitssensors (102, 104) und der Gasmischung;
Bereitstellung einer vorbestimmten Wärmemenge für die Membran (120) durch elektrische Heizelemente;
Bestimmen der Temperatur der Membran, die mit der Wärmemenge verbunden ist, die von dem elektrischen Heizelement an die Membran (120) und an die Wärmeleitung zwischen der Membran (120) und dem Gas abgegeben wird; und
Berechnen des Partialdrucks des Gases in Abhängigkeit von der Temperatur der Membran (120) des ersten Wärmeleitfähigkeitssensors (102) und der Temperatur der Membran (120) des zweiten Wärmeleitfähigkeitssensors (104);
wobei die Magnetisierungsrichtungen der beiden Permanentmagnete jedes der mindestens zwei Paare von Permanentmagneten einander entgegengesetzt sind;
wobei einander benachbarte Dauermagnete in dem Bereich nahe der Grenze zwischen ihnen Magnetfelder mit derselben Richtung erzeugen; und
Anbringen des mindestens einen ersten Wärmeleitfähigkeitssensors (102) in dem Bereich der Ebene (106), der den Grenzen zwischen benachbarten Paaren von Dauermagneten entspricht, und Anbringen des mindestens einen zweiten Wärmeleitfähigkeitssensors (104) im zentralen Teil des Raums zwischen den Dauermagneten jedes Paares.

## Revendications

1. Dispositif (100) pour déterminer une pression partielle d'un gaz paramagnétique et/ou diamagnétique dans un mélange de gaz, comprenant :
au moins deux paires (108, 110, 112, 114, 116) d'aimants permanents agencés de manière adjacente l'une à l'autre pour générer un premier champ magnétique ayant une première force et un second champ magnétique ayant une seconde force inférieure à la première force ;
au moins un premier capteur de conductivité thermique (102) agencé pour être exposé au premier champ magnétique et au moins un second capteur de conductivité thermique (104) agencé pour être exposé au second champ magnétique, où chacun des premiers et seconds capteurs de conductivité thermique (102, 104) comprend :
• une membrane (120) destinée à être en contact thermique avec le mélange de gaz, où la pression partielle du gaz est associée à une relation entre une valeur d'une conduction thermique entre la membrane (120) du premier capteur de conductivité thermique (102) et le mélange de gaz et une valeur d'une conduction thermique entre la membrane (120) du second capteur de conductivité thermique (104) et le mélange de gaz ;
• un élément chauffant électrique (138, 140) pour fournir une quantité de chaleur prédéterminée à la membrane ; et
• des moyens (138,140) pour déterminer la température de la membrane qui est associée à la quantité de chaleur fournie par l'élément chauffant électrique à la membrane et à la conduction thermique entre la membrane et le gaz ; et
des moyens pour calculer la pression partielle du gaz paramagnétique et/ou diamagnétique en réponse à la température de la membrane du premier capteur de conductivité thermique et à la température de la membrane du second capteur de conductivité thermique (104) ;
où les aimants permanents de chaque paire sont respectivement agencés au-dessus et au-dessous d'un plan (106) contenant la membrane (120) ;
où les orientations de l'aimantation des deux aimants permanents de chacune des au moins deux paires d'aimants permanents sont opposées l'une à l'autre ;
où les aimants permanents adjacents l'un à l'autre créent des champs magnétiques ayant la même orientation dans la région proche de la frontière qui les sépare ; et
où l'au moins un premier capteur de conductivité thermique (102) est placé dans la région du plan (106) correspondant aux frontières entre les paires adjacentes d'aimants permanents et l'au moins un second capteur de conductivité thermique (104) est placé dans la partie centrale de l'espace entre les aimants permanents de chaque paire.

2. Dispositif selon la revendication 1, où la membrane (120) du premier et du second capteur de conductivité thermique (104) présente un capot (130) formant un volume de mesure dans l'espace entre la membrane et le capot (130), le capot présentant une cavité (132) agencée pour la pénétration du gaz dans le volume de mesure par diffusion.

3. Dispositif selon l'une quelconque des revendications 1 ou 2, où les capteurs de conductivité thermique sont fabriqués à l'aide de la technique des couches minces et/ou les capteurs de conductivité thermique sont fabriqués à l'aide de la technique des nanofils.

4. Dispositif selon l'une quelconque des revendications 1 à 3, où les capteurs de conductivité thermique (102, 104) sont couplés thermiquement l'un à l'autre au moyen d'un substrat commun ou d'une plaque de support commune.

5. Dispositif selon l'une quelconque des revendications 1 à 4, où une différence entre la valeur de température de la membrane (120) du premier capteur de conductivité thermique (102) et une valeur de température de la membrane (120) du second capteur de conductivité thermique (104) est déterminée à l'aide de thermocouples ; où la pression partielle du gaz paramagnétique ou diamagnétique est déterminée sur la base de la différence entre la valeur de température de la membrane (120) du premier capteur de conductivité thermique (102) et la valeur de température de la membrane (120) du second capteur de conductivité thermique (104) mesurée à l'aide des thermocouples.

6. Dispositif selon l'une quelconque des revendications 1 à 5, où une température de la membrane (120) du premier capteur de conductivité thermique (102) et la température de la membrane (120) du second capteur de conductivité thermique (104) sont comparées l'une à l'autre en comparant une valeur d'une résistance agencée sur la membrane (120) du premier capteur de conductivité thermique (102) et une valeur d'une résistance agencée sur la membrane (120) du second capteur de conductivité thermique (104), les résistances étant agencées sur les membranes (120) au moyen d'une interconnexion des capteurs de conductivité thermique (102, 104) qui forme un ou plusieurs diviseurs de tension ou un circuit en pont de Wheatstone.

7. Dispositif selon l'une quelconque des revendications 1 à 6, où des thermocouples sont agencés pour déterminer une différence de température entre une température d'un substrat (144) du premier capteur de conductivité thermique (102) et la température de la membrane (120) du premier capteur de conductivité thermique (102) et une différence de température entre une température d'un substrat (144) du second capteur de conductivité thermique (104) et la température de la membrane (120) du second capteur de conductivité thermique (104) ; où les thermocouples sont interconnectés de manière à générer un signal associé à une différence entre la température des membranes (120), où la pression partielle du gaz est associée au signal.

8. Dispositif selon l'une quelconque des revendications 1 à 7, où une température de la membrane (120) du premier capteur de conductivité thermique (102) et la température de la membrane (120) du second capteur de conductivité thermique (104) sont comparées l'une à l'autre en comparant une valeur d'une résistance agencée sur la membrane (120) du premier capteur de conductivité thermique (102) et une valeur d'une résistance agencée sur la membrane (120) du second capteur de conductivité thermique (104), où les résistances permettant de comparer les températures des membranes (120) des premier et second capteurs de conductivité thermique (102, 104) sont en outre configurées pour être utilisées en tant qu'éléments chauffants électriques pour chauffer les membranes (120) des premier et second capteurs de conductivité thermique.

9. Dispositif selon l'une quelconque des revendications 1 à 8, comprenant en outre des moyens agencés sur les capteurs de conductivité thermique pour permettre l'ajustement d'un décalage de signal par ajustage laser.

10. Dispositif selon l'une quelconque des revendications 1 à 9, où les champs magnétiques générés par les aimants permanents sont influencés par des conducteurs de flux ferromagnétiques positionnés sur au moins l'un parmi le substrat du capteur de conductivité thermique ou la membrane (120).

11. Dispositif selon l'une quelconque des revendications 1 à 10, où les aimants permanents utilisés pour générer les champs magnétiques sont positionnés sur au moins l'un parmi le substrat du capteur de conductivité thermique ou la membrane (120).

12. Dispositif selon l'une quelconque des revendications 1 à 11, où les au moins deux aimants permanents sont agencés de telle sorte que les champs magnétiques créés au-dessus et au-dessous de la membrane (120) par les au moins deux aimants permanents ont une orientation sensiblement perpendiculaire à la direction du flux de chaleur entre la membrane (120) et le gaz.

13. Système de capteurs comprenant un dispositif selon l'une quelconque des revendications 1 à 12, le système de capteurs comprenant en outre :
une unité d'évaluation ; et/ou
des capteurs supplémentaires pour détecter une pression de gaz et/ou une température de gaz, et/ou une température de substrat et/ou une température ambiante ; et/ou
où le calcul de la pression partielle est en outre basé sur des données d'étalonnage des capteurs.

14. Procédé pour déterminer une pression partielle d'un gaz paramagnétique et/ou diamagnétique dans un mélange de gaz, le procédé comprenant les étapes consistant à :
agencer au moins deux paires d'aimants permanents adjacents l'un à l'autre pour générer un premier champ magnétique ayant une première force et un second champ magnétique ayant une seconde force inférieure à la première force, où les aimants permanents de chaque paire sont respectivement agencés au-dessus et au-dessous d'un plan contenant la membrane (120) ;
agencer au moins un premier capteur de conductivité thermique (102) pour qu'il soit exposé à un premier champ magnétique ayant une première force et agencer au moins un second capteur pour qu'il soit exposé à un second champ magnétique ayant une seconde force, où chacun des premiers et seconds capteurs de conductivité thermique (102, 104) comprend une membrane (120) destinée à être en contact thermique avec le mélange de gaz ;
associer la pression partielle du gaz paramagnétique et/ou diamagnétique à une relation entre une valeur d'une conduction thermique entre une membrane (120) du premier capteur de conductivité thermique (102) et le mélange de gaz et une valeur d'une conduction thermique entre une membrane (120) du second capteur de conductivité thermique (102, 104) et le mélange de gaz ;
fournir une quantité prédéterminée de chaleur à la membrane (120) au moyen d'éléments chauffants électriques ;
déterminer la température de la membrane qui est associée à la quantité de chaleur fournie par l'élément chauffant électrique à la membrane (120) et à la conduction thermique entre la membrane (120) et le gaz ; et
calculer la pression partielle du gaz en réponse à la température de la membrane (120) du premier capteur de conductivité thermique (102) et à la température de la membrane (120) du second capteur de conductivité thermique (104) ;
où les orientations de l'aimantation des deux aimants permanents de chacune des au moins deux paires d'aimants permanents sont opposées l'une à l'autre ;
où les aimants permanents adjacents l'un à l'autre créent des champs magnétiques ayant la même orientation dans la région proche de la frontière qui les sépare ; et
placer l'au moins un premier capteur de conductivité thermique (102) dans la région du plan (106) correspondant aux frontières entre les paires adjacentes d'aimants permanents et placer l'au moins un second capteur de conductivité thermique (104) dans la partie centrale de l'espace entre les aimants permanents de chaque paire.
